Europäisches Patentamt

(19) **European Patent Office**

**Office européen des brevets**

(11) Numéro de publication: **0 185 596**
**B1**

(12) **FASCICULE DE BREVET EUROPEEN**

(45) Date de publication du fascicule du brevet:
**03.05.89**

(21) Numéro de dépôt: **85402594.7**

(22) Date de dépôt: **20.12.85**

(51) Int. Cl.⁴: **C 09 K 5/00**

(54) Matériau de stockage d'énergie thermique et procédé de protection contre les chocs thermiques de composants, notamment électriques ou électroniques.

(30) Priorité: **20.12.84 FR 8419561**

(43) Date de publication de la demande:
**25.06.86 Bulletin 86/26**

(45) Mention de la délivrance du brevet:
**03.05.89 Bulletin 89/18**

(84) Etats contractants désignés:
**AT BE CH DE FR GB IT LI LU NL SE**

(56) Documents cités:
**FR-A- 2 480 488**
**US-A- 4 100 091**
**US-A- 4 326 238**

**CHEMICAL ABSTRACTS, vol. 99, no. 12, 19 septembre 1983, page 170, réf. no. 91061d, Columbus, Ohio, US; D.K. BENSON: "Solid state phase change materials" & ENERGY TECHNOL. 1983, 10th, 712-20**

(73) Titulaire: **ASSOCIATION POUR LA RECHERCHE ET LE DEVELOPPEMENT DES METHODES ET PROCESSUS INDUSTRIELS (ARMINES), 60, Boulevard Saint-Michel, F-75272 Paris Cédex 06 (FR)**

(72) Inventeur: **Achard, Patrick, 20, rue Alexis Julien, F-06560 Valbonne (FR)**
Inventeur: **Mayer, Didier, 22, rue de Gonelle "Le Haut Sartoux", F-06560 Valbonne (FR)**

(74) Mandataire: **Nony, Michel, Cabinet Nony 29, rue Cambacérès, F-75008 Paris (FR)**

# Description

La présente invention concerne un matériau de stockage d'énergie thermique pour la protection contre les chocs thermiques de composants, notamment électriques ou électroniques.

Lors de l'utilisation de certains composants électriques ou électroniques, une forte puissance doit parfois être dissipée dans un temps très bref. C'est en particulier le cas de composants électroniques appelés à fonctionner peu fréquemment ou de moteurs électriques confinés dans des enceintes fermées.

On a déjà proposé d'utiliser comme milieu de stockage de l'énergie thermique, des matériaux présentant un changement de phase liquide-solide à la température souhaitée, par exemple des hydrates salins. Le changement de phase s'accompagne d'une variation d'enthalpie par laquelle le matériau absorbe ou restitue de la chaleur.

Ces matériaux à transition de phase liquide-solide posent toutefois des problèmes de non congruence, de surfusion, et de changement de volume à la fusion, qui n'ont jusqu'à présent pas été résolus de manière satisfaisante.

La présente invention vise à palier ces inconvénients en fournissant un matériau de stockage d'énergie thermique de mise en œuvre plus facile que les matériaux à transition de phase liquide-solide.

A cet effet, l'invention a pour objet un matériau de stockage d'énergie thermique pour la protection contre les chocs thermiques de composants, notamment électriques ou électroniques, caractérisé par le fait qu'il est constitué par la combinaison d'au moins un corps possédant, dans une gamme de températures comprise entre 0°C et 185°C, une transition de phase solide-solide présentant une variation d'enthalpie au moins égale à 50 J/g, et un corps tel qu'une colle ou un polymère, stable à la température de transition de phase, et assurant la résistance mécanique du matériau.

De tels corps présentent une transition de phase, solide-solide présentant les caractéristiques ci-dessus sont connus. La variation d'enthalpie à la transition est due au passage d'un état anisotrope à un état isotrope (cf. Proc. of the Energy Technology Vol. 10 [1983], p. 712 – 720).

L'utilisation d'un corps à transition de phase solide-solide présente de nombreux avantages par rapport à celle d'un corps à transition liquide-solide.

C'est ainsi que le matériau selon l'invention ne pose pas de problème de non congruence. De plus, les changements de volume à la transition solide-solide, sont inférieurs à ceux rencontrés lors de la fusion. La mise en œuvre de ces matériaux est en outre facilitée par l'inexistence d'une phase liquide et la corrosion est négligeable.

Enfin, il est possible, grâce à la réalisation de mélanges, d'obtenir une gamme continue de températures de transition, ce qui n'est pas le cas pour les matériaux à transition liquide-solide.

Dans un premier mode de réalisation de l'invention, la combinaison entre le corps à transition solide-solide et la colle ou le polymère, est constituée par un mélange sensiblement homogène.

Dans le cas où un polymère est utilisé pour assurer la résistance mécanique du matériau, le mélange peut s'effectuer par addition des constituants à l'état liquide. Le matériau peut alors être moulé à la forme souhaitée en fonction de l'application envisagée. L'addition des constituants peut également être effectuée à l'état solide sous forme de poudre, le mélange étant alors par exemple mis en œuvre par frittage.

Dans le cas où c'est une colle qui est utilisée, le corps à transition de phase peut être réduit en poudre et mélange à la colle avant durcissement de cette dernière.

Dans un autre mode de réalisation de l'invention, le corps à transition de phase solide-solide est encapsulé dans la colle ou le polymère. Il est alors possible, en particulier, de réaliser des structures sandwich dans lesquelles le matériau à transition de phase solide-solide est disposé entre deux feuilles de polymère.

Dans un mode de réalisation particulier de l'invention, le corps à transition de phase solide-solide appartient au groupe constitué par les polyols, leurs dérivés aminés et nitrés, et les mélanges de ces corps.

Ces polyols sont de préférence des polyols à structure tétraédrique, composés de cinq atomes de carbone et ayant de 2 à 4 radicaux hydroxyles rattachés aux quatre carbones périphériques.

Les polyols présentent l'avantage de nécessiter une température relativement élevée pour passer à l'état isotrope, en raison de la cohésion importante de leur structure que leur confrère la présence de liaisons hydrogène. En outre, les mélanges binaires de corps de la famille des polyols forment des solutions solides stables dont la température de transition peut être choisie par la composition du mélange.

Plus particulièrement, le polyol utilisé peut appartenir au groupe constitué par le pentaerythritol, la pentaglycérine et le néopentylglycol.

Si l'on utilise un dérivé aminé ou nitré d'un polyol, celui-ci peut être choisi dans le groupe constitué par l'amino-2 hydroxyméthyl-2 propanediol-1,3 l'amino-2 méthyl-2 propanediol-1,3 l'hydroxyméthyl-2 nitro-2 propanediol-1,3 et le méthyl-2 nitro-2 propanediol-1,3.

Néanmoins, d'autres corps que les polyols peuvent être utilisés dans la mesure où ils présentent une transition de phase solide-solide dans la gamme de températures souhaitée et que leur variation d'enthalpie est suffisante.

C'est ainsi, en particulier, que le corps à transition de phase solide-solide utilisé peut être un acide propionique tel que l'acide diméthyl-2,2 propionique et l'acide bis(hydroxyméthyl)-2,2 propionique.

Dans le cas où l'on utilise une colle pour assurer la résistance mécanique du matériau, cette colle peut être une résine époxy du type de celle vendue sous la marque «Araldite» par la Société CIBA.

L'invention a également pour objet un procédé de protection contre les chocs thermiques de composants, notamment électriques ou électroniques caractérisé par le fait que l'on place ledit composant au contact d'un matériau de stockage d'énergie thermique tel que décrit ci-dessus.

Le composant peut par exemple être enrobé dans ce matériau.

L'énergie dissipée par le composant est donc stockée par le matériau pendant la durée d'utilisation, puis dissipée ultérieurement dans le milieu extérieur.

On a donne' ci-dessous, à titre d'exemple, les caractéristiques de la transition de phase solide-solide de quelques corps pouvant être utilisés pour la fabrication du matériau selon l'invention.

Le tableau 1 donne la température de transition et la variation d'enthalpie pour le pentaerythritol $(C-(CH_2-OH)_4)$, la pentaglycérine $(CH_3-C-(CH_2-OH)_3)$ et le néopentylglycol $((CH_3)_2-C-(CH_2-OH)_2)$ pour deux des composés aminés et nitrés de la pentaglycérine et du néopentylglycol et pour deux acides propioniques.

Tableau 1

| | $T_{tr}$ (°C) | $H_{tr}$ (J/g) |
|---|---|---|
| pentaerythinol (PE) | 184 | 250 |
| pentaglycérine (PG) | 86 | 161 |
| néopentylglycol (NPG) | 44 | 125 |
| amino-2 hydroxymethyl-2 propanediol–1,3 | 138 | 284 |
| amino-2 méthyl-2 propanediol-1,3 | 89 | 240 |
| hydroxymethyl-2 nitro-2 propanediol-1,3 | 81 | 148 |
| méthyl-2 nitro-2 propanediol-1,3 | 80 | 190 |
| acide bis(hydroxymethyl)-2,2 propionique | 153 | 287 |
| acide diméthyl-2,2 propionique | 8 | 86 |

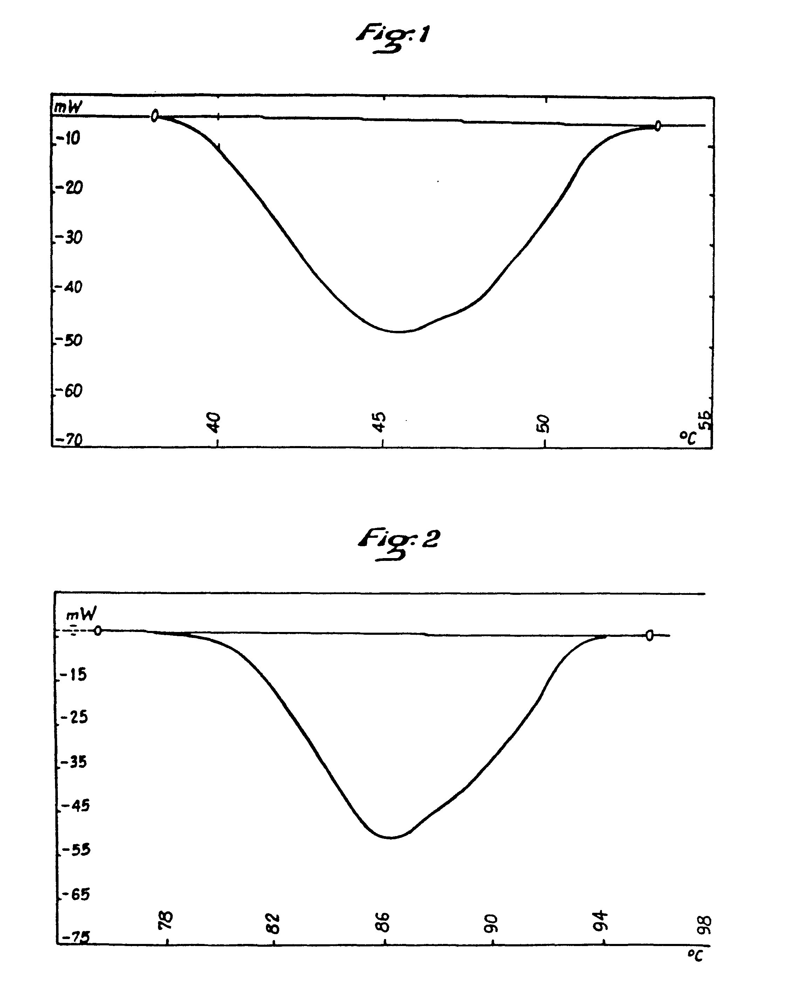

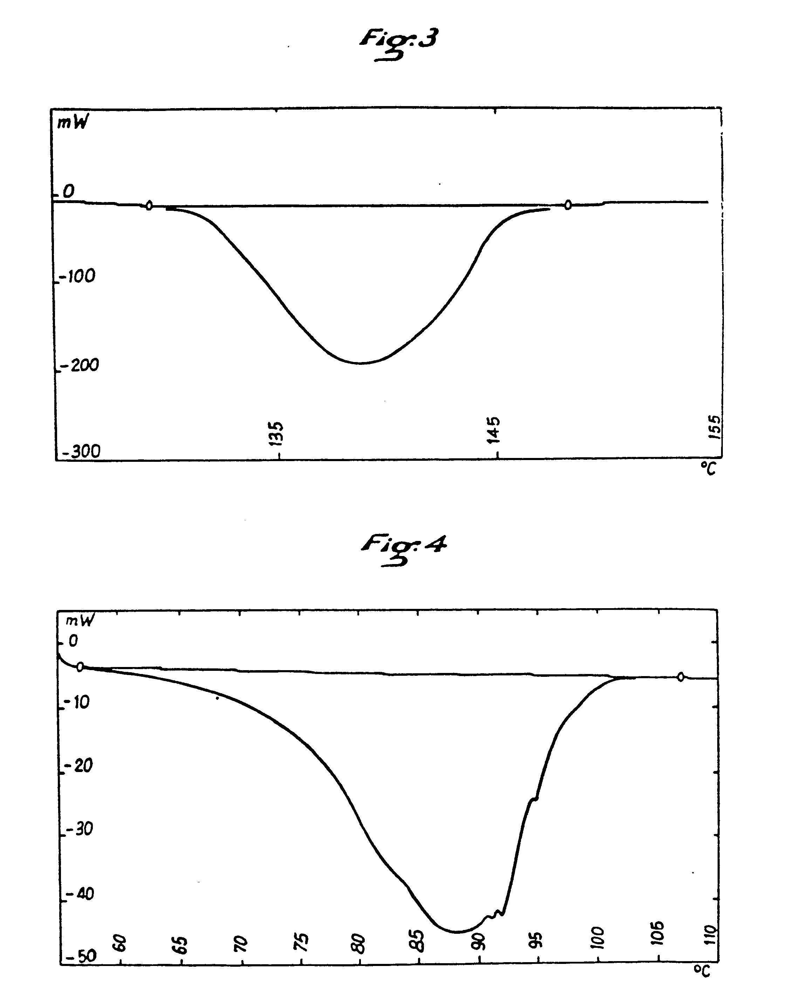

Les figures 1 à 4 sont les thermogrammes obtenus sur analyseur enthalpique du néopentylglycol, de la pentaglycérine, de l'amino-2 hydroxymethyl-2 propanediol-1,3 et de l'amino-2 méthyl-2 propanediol-1,3.

Le tableau 2 résume les caractéristiques du pic endothermique pour chacun de ces quatre corps.

Tableau 2

| | début du pic (°C) | fin du pic (°C) | enthalpie (J/g) (J/g) | température de sommet du pic (°C) |
|---|---|---|---|---|
| NPG | 38,2 | 53,4 | −135,2 | 45,6 |
| PG | 75,6 | 95,8 | −157,6 | 86.2 |
| amino-2 hydroxymethyl-2 propanediol-1,3 | 129,4 | 148,3 | −251,6 | 138,8 |
| amino-2 méthyl-2 propanediol-1,3 | 56,9 | 106,9 | −218,0 | 88,0 |

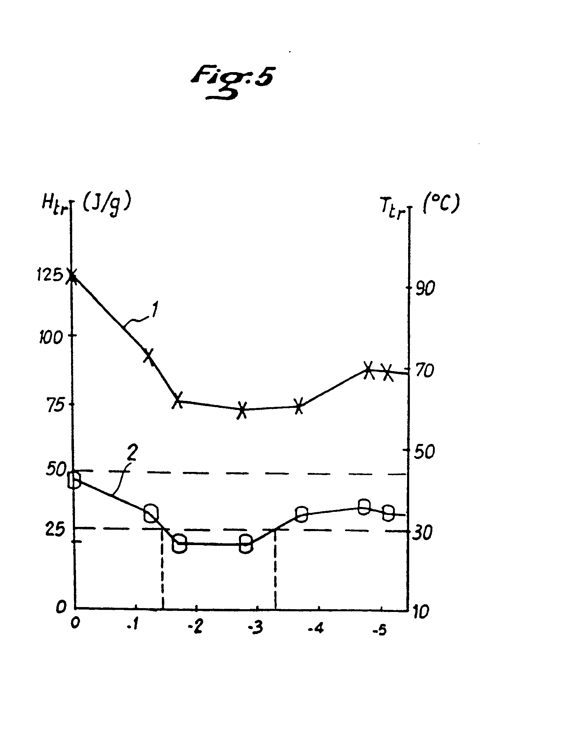

La figure 5 représente en 1 l'enthalpie de transition, et en 2, la température de transition, d'un mélange de pentaglycerine et de néopentylglycol pour de proportions de pentaglycérine comprises entre 0 et 50%.

La réalisation du mélange est obtenu par addition desconstituants à l'état liquide. Vu la forte tension de vapeur de ces constituants aux abords de leur température de fusion, la composition est contrôlée par chromatographie en phase gazeuse.

Il apparait clairement sur la figure 5 que, si l'on souhaite par exemple limiter la température de transition à 30°C. la proportion massique de pentaglycérine doit être comprise entre 14 et 33%.

Le tableau 3 donne la valeur de la température et de l'enthalpie de transition pour quelque valeur de la fraction massique en pentaglycerine.

Tableau 3

| fraction massique en PG | $T_{tr}$ (°C) | $H_{tr}$ (J/g) |
|---|---|---|
| 13 | 37,2 | 88 |
| 17,7 | 29,3 | 75 |
| 28 | 29,2 | 74,5 |
| 36,5 | 35,9 | 71 |
| 47,5 | 36,2 | 84 |

Le tableau 4 représente les valeurs de la température et de l'enthalpie de transition pour la pentaglycérine d'une part, et d'autre part pour un matériau selon l'invention réalisé soit par encapsulation de pentaglycérine dans, soit par mélange de cette dernière avec, une «Araldite» ayant pour but d'assurer la résistance mécanique du matériau.

Tableau 4

| | | $T_{tr}$ (°C) | $\Delta\ H_{tr}$ (J/g) |
|---|---|---|---|
| | 2 Hydroxymethyl-2-Methyl 1,3 Propanediol (PG) | 83 – 84 | 148,4 |
| Encapsulation | Araldite prise rapide 86% en PG | 83 – 84 | 125,4 |
| Mélange | Araldite prise rapide 50% en PG | 84 | 69,8 |
| | 67% en PG | 84 | 96,1 |
| | Araldite MY 740 Durcisseur HY 905 50% en PC | 85 | 68,6 |
| | Araldite MCY 212 Durcisseur HY 956 50% en PG | 85 | 65,6 |

## Revendications

1. Matériau de stockage d'énergie thermique, pour la protection contre les chocs thermiques de composants, notamment électriques ou électroniques, caractérisé par le fait qu'il est constitué par la combinaison d'au moins un corps possédant, dans une gamme de température comprise entre 0°C et 185°C, une transition de phase solide-solide présentant une variation d'enthalpie au moins égale à 50 J/g, et un corps, tel qu'une colle ou un polymère, stable à la température de transition de phase, et assurant la résistance mécanique du matériau.

2. Matériau selon la revendication 1, caractérisé par le fait que, ladite combinaison est constituée par un mélange sensiblement homogène.

3. Matériau selon la revendication 1, caractérisé par le fait que, pour constituer ladite combinaison, ledit corps à transition de phase solide-solide est encapsulé dans le corps tel que la colle ou le polymère.

4. Matériau selon l'une quelconque des revendications 1 à 3, caractérisé par le fait que ledit corps à transition de phase solide-solide appartient au groupe constitué par les polyols, leurs dérivés aminés et nitrés, et les mélanges de ces corps.

5. Matériau selon la revendication 4, caractérisé par le fait que lesdits polyols sont des polyols à structure tétraédrique, composés de cinq atomes de carbone et ayant de 2 à 4 radicaux hydroxyles rataché aux quatre carbones périphériques.

6. Matériau selon la revendication 5, caractérisé par le fait que lesdits polyols appartiennent au groupe constitué par le pentaerythitol, la pentaglycérine et le néopentylglycol.

7. Matériau selon l'une quelconque des revendications 4 à 6, caractérisé par le fait que lesdits dérivés aminés ou nitrés appartiennent au groupe constitué par l'amino-2 hydroxymethyl-2 propanediol-1,3 l'amino-2 méthyl-2 propanediol-1,3 l'hydroxymethyl-2 nitro-2 propanediol-1,3 et le méthyl-2-nitro-2 propanediol 1,3.

8. Matériau selon l'une quelconque des revendications 1 à 3, caractérisé par le fait que ledit corps à transition de phase solide-solide est un acide propionique.

9. Matériau selon la revendication 8, caractérisé par le fait que ledit acide propionique appartient au groupe constitué par l'acide diméthyl-2,2- propionique et l'acide bis(hydroxymethyl)-2,2 propionique.

10. Matériau selon l'une quelconque des revendications 1 à 9, caractérise par le fait que ladite colle est un résine époxy.

11. Procédé de protection contre les chocs thermiques de composants notamment électriques ou électroniques, caractérisé par le fait que l'on place ledit composant au contact d'un matériau selon l'une quelconque des revendications 1 à 10.

## Patentansprüche

1. Material zur Speicherung thermischer Energie, zum Schutz von Bauteilen, insbesondere elektrischen oder elektronischen Bauteilen gegen thermischen Schock, dadurch gekennzeichnet, daß es aus einer Kombination aus mindestens einem Bestandteil, der in einem Temperaturbereich zwischen 0°C und 185°C einen Fest-Fest-Phasenübergang mit einer Änderungsenthalpie von mindestens 50 J/g aufweist, und einen Bestandteil, wie einen Klebstoff oder ein Polymer, welcher bei der Phasenumwandlungstemperatur stabil ist und die mechanische Festigkeit des Materials sicherstellt, gebildet ist.

2. Material nach Anspruch 1, dadurch gekennzeichnet, daß die Kombination aus einer im wesentlichen homogenen Mischung besteht.

3. Material nach Anspruch 1, dadurch gekennzeichnet, daß zur Bildung der Kombination der Bestandteil mit dem Fest-Fest-Phasenübergang in den Bestandteil, wie in Klebstoff oder das Polymer, eingekapselt ist.

4. Material nach einem der Ansprüche 1 bis 3, dadurch gekennzeichnet, daß der Körper mit dem Fest-Fest-Phasenübergang der Gruppe angehört, die Polyole, deren Amino- und Nitroderivate und Mischungen dieser Bestandteile umfaßt.

5. Material nach Anspruch 4, dadurch gekennzeichnet, daß die Polyole Polyole mit Tetraederstruktur sind, die fünf Kohlenstoffatome und zwei bis vier periphere Kohlenstoffatome gebundene Hydroxylgruppen aufweisen.

6. Material nach Anspruch 5, dadurch gekennzeichnet, daß die Polyole der Gruppe angehören, die Pentaaerythrit, Pentaglycerin und Neopentylglykol umfaßt.

7. Material nach einem der Ansprüche 4 bis 6, dadurch gekennzeichnet, daß die Amino- oder Nitroderivate der Gruppe angehören, die 2-Amino-2-hydroxymethylpropandiol-1,3, 2-Amino-2-methyl-propandiol-1,3 2-Hydroxymethyl-2-nitro-propandiol-1,3 und 2-Methyl-2-nitro-propandiol 1,3 umfaßt.

8. Material nach einem der Ansprüche 1 bis 3, dadurch gekennzeichnet, daß der Bestandteil mit dem Fest-Fest-Phasenübergang eine Propionsäure ist.

9. Material nach Anspruch 8, dadurch gekennzeichnet, daß die Propionsäure der Gruppe angehört, die 2,2-Dimethyl-Propionsäure und 2,2-Bis-(hydroxymethyl)-propionsäure umfaßt.

10. Material nach einem der Ansprüche 1 bis 9, dadurch gekennzeichnet, daß der Klebstoff ein Epoxidharz ist.

11. Verfahren zum Schutz von insbesondere elektrischen oder elektronischen Bauteilen gegen den thermischen Schock, dadurch gekennzeichnet, daß man das Bauteil mit einem Material nach einem der Ansprüche 1 bis 10 in Kontakt bringt.

**Claims**

1. Material for storing thermal energy, for protecting components, especially electric and electronic ones against thermal shocks, characterized by the fact that it is formed by the combination of at least one body having a solid-solid phase transition in the temperature range between 0°C and 185°C, with an enthalpy change of at least 50 J/g, and by a body, such as an adhesive or a polymer, which is stable at the temperature of phase transition, and ensures that the material has mechanical strength.

2. Material according to claim 1, characterized by the fact that the said combination is formed by a substantially homogeneous mixture.

3. Material according to claim 1, characterized by the fact that to form the said combination, the said body undergoing solid-solid phase transition is encapsulated in the body such as the adhesive or the polymer.

4. Material according to any one of claims 1 to 3, characterized by the fact that the said body undergoing solid-solid phase transition belongs to the group comprising polyols, amino- and nitro-derivatives of these, and mixtures of these bodies.

5. Material according to claim 4, characterized by the fact that the said polyols are polyols of tetrahedral structure, formed from five carbone atoms and having 2 to 4 hydroxyl radicals attached to the four peripheral carbons.

6. Material according to claim 5, characterized by the fact that the said polyols belong to the group comprising pentaerythitol, pentaglycerol and neopentylglycol.

7. Material according to any one of claims 4 to 6, characterized by the fact that the said amino- or nitroderivatives belong to the group comprising 2-amino-2-hydroxymethyl-1,3-propanediol, 2-amino-2-methyl-1,3-propanediol, 2-hydroxymethyl-2-nitro-1,3-propanediol and 2-methyl-2-nitro-1,3-propanediol.

8. Material according to any of claims 1 to 3, characterized by the fact that the said body undergoing solid-solid phase transition is a propionic acid.

9. Material according to claim 8, characterized by the fact that the said propionic acid belongs to the group comprising 2,2-dimethylpropionic acid and 2,2-bis-(methoxy)propionic acid.

10. Material according to any one of claims 1 to 9, characterized by the fact that the said adhesive is an epoxy resin.

11. Process for protecting components, especially electrical or electronic ones, against thermal shocks, characterized by the fact that the said component is placed in contact with a material according to any one of claims 1 to 10.

## Fig.1

## Fig.2

## Fig. 3

## Fig. 4

EP 0185596 B1

Fig:5

11